# EUROPÄISCHE PATENTSCHRIFT

(11) **EP 0 309 927 B1**
(45) Veröffentlichungstag und Bekanntmachung des Hinweises auf die Patenterteilung: **30.03.1994**
(21) Anmeldenummer: 88115625.1
(22) Anmeldetag: 23.09.1988
(51) Int. Cl.: G01S 17/10

(54) **Entfernungsbild-Sensor**
Distance picture sensor
Détecteur pour image à distance

(30) Priorität: 25.09.1987 DE 3732347
(43) Veröffentlichungstag der Anmeldung: 05.04.1989
(73) Patentinhaber: TEMIC TELEFUNKEN microelectronic GmbH, 74072 Heilbronn (DE)
(72) Erfinder: Laucht, Horst, Dr., D-8206 Bruckmühl (DE); Spies, Hans, D-8068 Pfaffenhofen (DE); Spies, Martin, D-8068 Pfaffenhofen (DE)
(74) Vertreter: Maute, Hans-Jürgen, Dipl.-Ing.

(56) Entgegenhaltungen:
- EP-A- 0 151 257
- WO-A-88/02099
- DE-A- 3 020 996
- GB-A- 2 122 833
- US-A- 4 727 259

## Beschreibung

Die Erfindung bezieht sich auf einen Entfernungsbild-Sensor mit einer gepulsten Lichtquelle gemäß dem Oberbegriff des Anspruchs 1.

Dieser Oberbegriff ist gemäß der EP 0 151 257 A3 gebildet worden. Daraus ist ein Entfernungsbild-Sensor mit einer gepulsten Lichtquelle, einer Sende- und Empfangsoptik, einer Zeitablaufsteuerung und einem steuerbaren Shutter bekannt, ebenso wie ein CCD-Array. Nicht bekannt ist hieraus die erfindungsgemäße Auswertung, Steuerung der einzelnen Funktionen und das Zusammensetzen zu einem reliefartigen Gesamtbild.

Dies gilt auch für die Strahlungs-Detektoranordnung nach der GB 2 122 833 A, bei der ein CCD-Array auf einem Silizium-Substrat nur dazu dient, auf diesem exakt den Ort zu ermitteln, an dem ein kurzes Strahlungssignal auftrifft.

Durch die DE-PS 30 20 996 der Anmelderin ist eine Einrichtung zur Bestimmung der Auslöseentfernung von einem sich auf ein Ziel zu bewegenden Flugkörper bekannt geworden, bei der mittels einer Laufzeitmessung von mindestens zwei zeitlich aufeinanderfolgenden und somit unterschiedlichen Entfernungen zugeordneten Entfernungstoren zugeführt werden. Mit dieser Einrichtung ist zwar ein Kontrastbild erzeugbar, jedoch kein wirkliches Entfernungsbild.

Der vorliegenden Erfindung liegt die Aufgabe zugrunde, einen Entfernungsbild-Sensor der eingangs genannten Art zu schaffen, mit dem ein reliefartiges Entfernungsbild geschaffen wird, mit dem Abstände zwischen einem Fahrzeug und Hindernissen, sowie Annäherungsgeschwlndlgkeits-Gradienten ohne bewegte Teile ermittelt werden können.

Diese Aufgabe wird durch die im Anspruch 1 aufgeführten Maßnahmen gelöst. In den Unteransprüchen sind Welterbildungen und Ausgestaltungen aufgezeigt und in der nachfolgenden Beschreibung ist ein Ausführungsbeispiel erläutert und in den Figuren der Zeichnung skizziert. Es zeigen:
- Fig. 1: ein Blockschaltbild des Gesamtaufbaus des Entfernungsbild-Sensors in schematischer Darstellung,
- Fig. 2: eine Schemaskizze mit einem U/t-Diagramm eines Kontrastbildes und vier hintereinander zeitlich verschobenen Torimpulsen nach Auftastung und Integration, sowie die Kennlinie des Videobildes als Ergebnis der Differenzbildung der vier Torimpulse.
- Fig. 3: ein Blockschaltbild einer Teilfläche der Matrix des CCD-Entfernungsbildsensor-Chips.

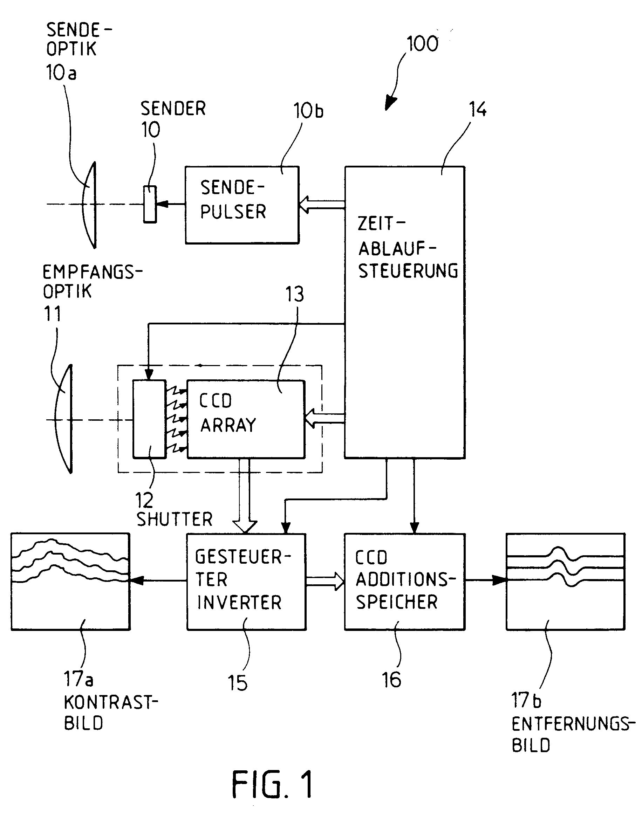

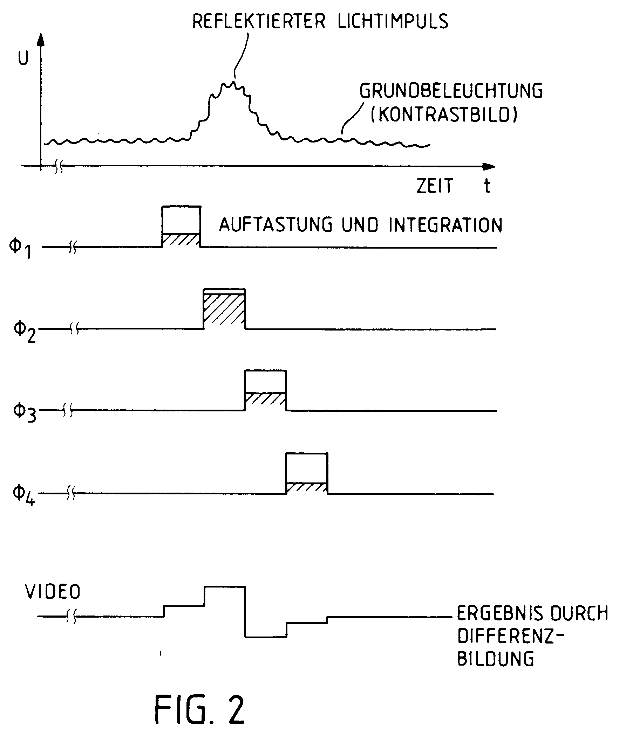

Die Fig. 1 der Zeichnung skizziert den Gesamtaufbau des Entfernungsbild-Sensors 100, der aus einem Laserpulser 10b und einem Lasersender 10 mit zugeordneter Sendeoptik 10a, sowie aus einer Empfangsoptik 11 besteht, wobei hinter letzterer ein mit einem elektronischen Shutter 12 versehenes CCD-Array 13 angeordnet ist. Der Shutter 12 kann auch extern steuerbar sein. Der so ausgebildete Sender und Empfänger wird durch eine Zeitablaufsteuerungs-Einrichtung 14 gesteuert. Durch letztere wird der Sendepuls, der Torimpuls und die Transferfunktion - wie dies in Fig. 2 veranschaulicht ist - so gesteuert, daß die gesamte zu betrachtende Entfernung durch eine Anzahl von hintereinander zeitlich verschobenen Torimpulse - beispielsweise φ1 bis φ4 - abgetastet wird.

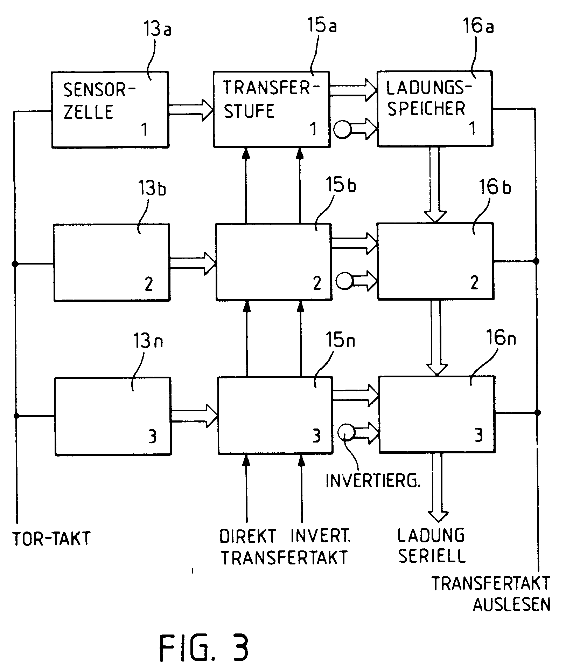

Um nun ein Entfernungsbild zu erhalten, - beispielsweise ein Bildpunkt wird (wie in Fig. 3 skizziert) betrachtet - wird die während des Torimpulses am Sensor aufgelaufene Ladung zuerst in einer CCD-Speicherzelle 16a - 16n abgespeichert, bei dem nächstfolgenden Torimpuls wird die dabei aufgelaufene Ladung zuerst invertiert und In die gleiche Speicherzelle abgegeben, womit eine Subtraktion beider Ladungen erreicht wird. Selbstverständlich können die Ladungen aller Zellen auch vorher Integriert und als Einzelbild subtrahiert werden.

Durch die sequentielle Abtastung erscheint als Ergebnis der Differenzbildung im CCD-Additionsspeicher 16 ein Videobild, wie es als Beispiel in Fig. 2 dargestellt ist und den differenzierten, reflektierten Lichtimpuls zeigt. Das durch den generierten Tortakt so in seiner Zeiteinhelt transformierte Signal einer Vielzahl von Bildpunkten wird zu einem Entfernungsbild zusammengesetzt. Aus der Fig. 1 ist ersichtlich, daß das vom gesteuerten Inverter 15 aufgenommene und gebildete Kontrastbild 17a einmal direkt und anschließend invertiert dem CCD-Additionsspeicher 16 zur Subtraktion und Speicherung des Restwertes eingegeben und dort zum Entfernungsbild 17b zusammengesetzt wird.

Das CCD-Array 13 setzt sich beispielsweise aus einer Matrix von 100 x 100 Sensorzellen 13a - 13n zusammen, der eine Transfer-Stufe 15a - 15n und ein Ladungsspeicher 16a - 16n zugeordnet ist. Diese so gebildete Matrix kann monolithisch auf einen Chip integriert werden. Damit ist es nun möglich, eine sequentielle Subtraktion der einfallenden reflektierten Energie zum Zeitpunkt "t" vorzunehmen. Der Shutter 12 steuert hier den Sensor 100 mittels Zeitablaufsteuerung 14 für eine kurze Torzeit - beispielsweise 10 nsec empfindlich und zwar bei einer Beleuchtungsimpulslänge von z.B. 10 bis 100 nsec.

Nach dem Transfer der Ladungen und dem gesteuerten Auslesen und Zusammensetzen der gewonnenen Informationen ist nun ein echter Entfernungsbild-Sensor geschaffen der ein reliefartiges Entfernungsbild zur Ermittlung der Abstände zwischen einem Fahrzeug und Hindernissen etc. liefert.

## Patentansprüche

1. Entfernungsbild-Sensor mit einer gepulsten Lichtquelle (10), mit Sende- und Empfangsoptik (11), mit einer Zeitablaufsteuerung (14), und mit einem mit einem steuerbaren Shutter (12) versehenen CCD-Array (13), **dadurch gekennzeichnet**, daß die während der durch Takten erzeugten Torimpulse am CCD-Array mit Matrix-Aufbau infolge der reflektierten Lichtimpulse aufgelaufenen Ladungen selbst oder mittels einer nachgeschalteten Elektronik derart ausgewertet werden, daß je Sensorzelle (13a - 13n) der Matrix direkt oder nach Integration eine Differenzbildung der zeitlich nacheinander folgenden Signalamplitudenwerte erfolgt und aus diesem Signal je Sensorzelle eine Entfernungsinformation abgeleitet wird, und daß die Zeitablaufsteuerung (14) den Sendepuls, den Torimpuls und die Transferfunktion in der Weise steuert, daß die gesamte zu betrachtende Entfernung durch eine Anzahl von hintereinander zeitlich verschobenen Torimpulsen sequentiell abgetastet wird (φ₁ bis φ₄).

2. Entfernungsbild-Sensor nach Anspruch 1, **dadurch gekennzeichnet**, daß hinter der Empfangsoptik (11) ein mit einem elektronischen oder extern steuerbaren Shutter (12) versehenes CCD-Array (13) angeordnet ist, das die während der Torimpulse am Sensor aufgelaufenen Ladungen zuerst in den CCD-Speicherzellen (13'a - 13'n) abspeichert, und bei den jeweils nächstfolgenden Torimpulsen, die dabei aufgelaufenen Ladungen zuerst in einer Transferstufe (15'a - 15'n) invertiert und dann in die Speicherzelle (16'a - 16'n) des CCD-Additionsspeichers (16) zur Subtraktion und Speicherung des Restwertes eingibt, wobei das Entfernungsbild nach dem Mehrfach-Gatterverfahren ausgewertet wird.

3. Entfernungsbild-Sensor nach einem der Ansprüche 1 und 2, **dadurch gekennzeichnet**, daß der Shutter (12) ein Gate vom CCD-Array (13) ist, oder ein Bildwandler oder ein Restlichtverstärker.

4. Entfernungsbild-Sensor nach einem der Ansprüche 1 bis 3, **dadurch gekennzeichnet**, daß der Shutter (12) den Sensor (10) beispielsweise für eine Torzeit von 10 nsec bei einer Beleuchtungsimpulslänge von 10 - 100 nsec empfindlich steuert.

5. Entfernungsbild-Sensor nach einem der Ansprüche 1 bis 4, **dadurch gekennzeichnet**, daß das CCD-Array 13, der gesteuerte Inverter (15) und der CCD-Additionsspeicher (16) eine Vielzahl von Sensor-Flächen aufweist, - insbesondere eine Matrix von 100 x 100 - und jede Sensorfläche sich aus einer Sensor-Zelle (13a - 13n) mit einem gesteuerten Inverter als sogenannter Transferstufe (15'a - 15'n) und einem Ladungsspeicher (16'a - 16'n) zusammensetzt.

6. Entfernungsbild-Sensor nach einem der Ansprüche 1 bis 5, **dadurch gekennzeichnet**, daß die Matrix von Sensor-Zellen (13a - 13n), Transfer-Stufen (15'a - 15'n) und Ladungsspeicher (16'a - 16'n) auf einem Chip monolithisch integrierbar ist.

## Claims

1. A distance image sensor with a pulsed light source (10) with transmitting and receiving optics (11), with a time-lapse control system (14), and with a CCD array (13) provided with a controllable shutter (12), characterised in that the charges which have accumulated at the CCD array with matrix build-up resulting from the reflected light pulses during the cyclically-generated gate pulses are evaluated automatically or by means of downstream electronics in such a way that each sensor cell (13a - 13n) of the matrix results directly from, or after integration of a difference formation of, the temporally successive signal amplitude values, and a distance message is derived for each sensor cell from this signal, and that the time-lapse control system (14) controls the transmission pulse, the gate pulse and the transfer function so that the total distance to be viewed is scanned sequentially by a number of gate pulses which are temporally displaced one behind another (φ₁ to φ₄).

2. A distance image sensor according to claim 1, characterised in that a CCD array (13) provided with a electronic or an externally controllable shutter (12) is disposed behind the receiving optics (11), that the charges which have accumulated at the sensor during the gate pulses are first stored in the CCD memory cells (13'a - 13'n), and the charges accumulated during the immediately following gate pulses in each case are first inverted in a transfer stage (15'a - 15'n) and are then fed into the memory cell (16'a - 16'n) of the CCD addition memory (16) for subtraction and for storage of the residual value, wherein the distance image is evaluated by the multiple-grid method.

3. A distance image sensor according to one of claims 1 and 2, characterised in that the shutter (12) is a gate of the CCD array (13), or an image converter or a low-light-level amplifier.

4. A distance image according to any one of claims 1 to 3, characterised in that the shutter (12) controls the sensor (10) sensitively, for example for a gate duration of 10 nsec at an illumination pulse length of 10 - 100 nsec.

5. A distance image sensor according to any one of claims 1 to 4, characterised in that the CCD array (13) the controlled inverter (15) and the CCD addition memory (16) have a multiplicity of sensor areas - particularly a matrix of 100 x 100 - and each sensor area is composed of a sensor cell (13a - 13n) with a controlled inverter as the so-called transfer stage (15'a - 15'n) and a charge memory (16'a - 16'n).

6. A distance image sensor according to any one of claims 1 to 5, characterised in that the matrix of sensor cells (13a - 13n), transfer stages (15'a - 15'n) and charge memories (16'a - 16'n) can be integrated monolithically on one chip.

## Revendications

1. Détecteur d'images de distance comportant une source lumineuse (10) pulsée, une optique (11) d'émission et de réception, un séquenceur de temps (14) et un réseau CCD (13) pourvu d'un obturateur commandé, caractérisé par le fait que les charges générées sur le réseau CCD à structure en matrice pendant les impulsions de déclenchement obtenues par génération de rythme sont exploitées en tant que telles ou au moyen d'une électronique montée à la suite, de telle sorte que, pour chaque cellule de détection (13a, 13n) de la matrice une différence des amplitudes de signal successives dans le temps soit formée directement ou après intégration et que pour chaque cellule de détection, une information de distance est dérivée de ce signal et par le fait que le séquenceur de temps (14) commande l'impulsion d'émission, l'impulsion de déclenchement et la fonction de transfert de telle sorte que l'ensemble de la distance à considérer soit interrogée de manière séquentielle par un certain nombre d'impulsions de déclenchement successives décalées dans le temps (φ1 à φ4).

2. Détecteur d'images de distance selon la revendication 1, caractérisé par le fait qu'un réseau CCD (13) pourvu d'un obturateur (12) électronique ou à commande extérieure est disposé derrière l'optique de réception (11), lequel réseau stocke dans les emplacements de mémoire CCD (13'a - 13'n) les charges générées sur le détecteur pendant les impulsions de déclenchement et lors chaque fois des impulsions de déclenchement correspondantes suivantes, inverse dans un étage de transfert (15'a -15'n) les charges générées et les transmet à l'emplacement de mémoire (16'a - 16'n) de la mémoire d'addition CCD (16) à des fins de soustraction et de stockage du reste, l'image de distance étant exploitée selon le principe des réseaux multiples.

3. Détecteur d'images de distance selon l'une des revendications 1 et 2, caractérisé par le fait que l'obturateur (12) est une porte du réseau CCD (13), un convertisseur d'image ou un intensificateur de lumière résiduelle.

4. Détecteur d'images de distance selon l'une des revendications 1 à 3, caractérisé par le fait que l'obturateur (12) commande le détecteur (10) par exemple pour un temps de déclenchement de 10 nsec pour une durée d'impulsion lumineuse de 10 - 100 nsec.

5. Détecteur d'images de distance selon l'une des revendications 1 à 4, caractérisé par le fait que le réseau CCD (13), l'inverseur (15) commandé et la mémoire d'addition CCD (16) présentent une pluralité de surfaces détectrices - notamment une matrice de 100 x 100 - et que chaque surface détectrice est composée d'une cellule détectrice (13a - 13n) avec un inverseur commandé comme étage (15'a - 15'n) dit de transfert et une mémoire de charge (16'a - 16'n).

6. Détecteur d'images de distance selon l'une des revendications 1 à 5, caractérisé par le fait que la matrice de cellules détectrices (13a -13n), les étages de transfert (15'a -15'n) et les mémoires de charge (16'a -16'n) sont intégrés de manière monolithique sur une puce.
